# EUROPEAN PATENT APPLICATION

(11) **EP 4 064 037 A1**
(43) Date of publication of application: **28.09.2022**
(21) Application number: 21198242.6
(22) Date of filing: 22.09.2021
(51) Int. Cl.: G06F 8/41, G06F 8/75

(54) **METHOD FOR COMPILATION, APPARATUS FOR COMPILATION, ELECTRONIC DEVICE, STORAGE MEDIUM, AND PROGRAM PRODUCT**

(30) Priority: 23.03.2021 CN 202110309279
(71) Applicant: BEIJING BAIDU NETCOM SCIENCE TECHNOLOGY CO., LTD., No. 10 Shangdi 10th Street Haidian District Beijing 100085 (CN)
(72) Inventor: Wu, Huanzhou, Beijing, 100085 (CN); Wang, Huan, Beijing, 100085 (CN); Zhou, Wei, Beijing, 100085 (CN); Luo, Tao, Beijing, 100085 (CN); Lan, Xiang, Beijing, 100085 (CN)
(74) Representative: Hoffmann Eitle

(57) **Abstract**

The present disclosure provides a method for compilation, an apparatus for compilation, an electronic device, a storage medium and a program product, which may be used in a field of source file compilation and a field of deep learning. The method includes: acquiring a source file set containing source files in a type; combining a plurality of source files in the source file set into at least one source file subset, based on a predetermined combination rule associated with the source file set; and compiling each source file subset of the at least one source file subset as a whole. With the above method, it is possible to effectively improve an efficiency of compilation and reduce a time consumption for compilation by reducing the number of times of compilation for the source files, so as to improve user experience.

## Description

### TECHNICAL FIELD

The present disclosure relates to a computer technology, and in particular to a method for compilation, an apparatus for compilation, an electronic device, a computer-readable storage medium and a computer program product, which may be used in a field of source file compilation and a field of deep learning.

### BACKGROUND

C++ language is a statically typed language. C++ language source files, for example, in a format of .CC, need to be compiled to generate binary files to run or to be used. When compiling the C++ language source files, each source file is regarded as a compilation unit and compiled by a compiler. Each compilation unit is compiled to generate a target file, and the target file is finally linked into a binary product by a linker. During compilation, a process of compiling the compilation unit by the compiler so as to obtain the target file is time-consuming. In general, a number of the compilation units is consistent with a number of the source files in a project. A large project may contain thousands or more compilation units. For each compilation unit, it is necessary to start the compiler, read source files and dependent files on a disk, and write the target file obtained by compilation to the disk. When finally linking the target file, the linker needs to read the target file generated for each compilation unit from the disk. Therefore, too many compilation units may increase an accumulation of time consumption for starting the compilers, reading from the disk, and writing in the disk, which results in a redundant time consumption in the compilation. Similarly, the above problems also exist in a compilation of CUDA source files.

However, in a traditional technology for source file compilation, each source file is compiled separately, or only part of source files may be combined very roughly and then compiled, so that the compilation for the project needs to be performed for a large number of times. This cannot be adapted to a large project containing a large number of source files, and anomalies may occur when the source files increase or decrease, so it is difficult to meet needs of users.

### SUMMARY

According to the embodiments of the present disclosure, there is provided a method for compilation, an apparatus for compilation, an electronic device, a computer-readable storage medium, and a computer program product.

In a first aspect of the present disclosure, there is provided a method for compilation, including: acquiring a source file set containing source files in a type; combining a plurality of source files in the source file set into at least one source file subset, based on a predetermined combination rule associated with the source file set; and compiling each source file subset of the at least one source file subset as a whole.

In a second aspect of the present disclosure, there is provided an apparatus for compilation, including: an acquisition module configured to acquire a source file set containing source files in a type; a first combination module configured to combine a plurality of source files in the source file set into at least one source file subset, based on a predetermined combination rule associated with the source file set; and a first compilation module configured to compile each source file subset of the at least one source file subset as a whole.

In a third aspect of the present disclosure, there is provided an electronic device, including: at least one processor; and a memory communicatively connected to the at least one processor, wherein the memory stores instructions executable by the at least one processor, and the instructions, when executed by the at least one processor, cause the at least one processor to implement the method described in the first aspect of the present disclosure.

In a fourth aspect of the present disclosure, there is provided a non-transitory computer-readable storage medium having computer instructions stored thereon, wherein the computer instructions allow a computer to implement the method described in the first aspect of the present disclosure.

In a fifth aspect of the present disclosure, there is provided a computer program product containing computer programs, wherein the computer programs are executable by a processor to implement the method described in the first aspect of the present disclosure.

A method for compilation is provided by using the technology according to the present disclosure. A technical scheme using the method may be implemented to combine source files in a project containing a plurality of source files according to the predetermined combination rule, and then compile the source files, so as to effectively improve the efficiency of compilation and reduce the time of compilation by reducing the number of times of compilation.

It should be understood that content described in this section is not intended to limit key or important features in the embodiments of the present disclosure, nor is it intended to limit the scope of the present disclosure. Other features of the present disclosure will be easily understood through the following description.

### BRIEF DESCRIPTION OF THE DRAWINGS

By describing the exemplary embodiments of the present disclosure in more detail in combination with the accompanying drawings, the above and other objectives, features and advantages of the present disclosure will become more apparent. In the exemplary embodiments of the present disclosure, the same reference numerals usually represent the same components. It should be understood that the drawings are used to understand the solution better and do not constitute a limitation to the present disclosure.
FIG. 1 shows a schematic block diagram of an environment 100 for compilation in which a method for compilation in some embodiments of the present disclosure may be implemented.
FIG. 2 shows a flowchart of a method 200 for compilation according to some embodiments of the present disclosure.
FIG. 3 shows a flowchart of a method 300 for compilation according to some embodiments of the present disclosure.
FIG. 4 shows a schematic block diagram of an apparatus 400 for compilation according to some embodiments of the present disclosure.
FIG. 5 shows a schematic block diagram of an exemplary electronic device 500 for implementing the embodiments of the present disclosure.

In the accompany drawings, the same or corresponding reference numerals represent the same or corresponding parts.

### DETAILED DESCRIPTION OF EMBODIMENTS

Hereinafter, preferred embodiments of the present disclosure will be described in more detail with reference to the drawings. Although the exemplary embodiments of the present disclosure are shown in the drawings, it should be understood that the present disclosure may be implemented in various forms and should not be limited by the embodiments described herein. On the contrary, these embodiments are provided to enable a more thorough understanding of the present disclosure and to fully convey the scope of the present disclosure to those skilled in the art.

The term "including" and its variants as used herein means open-ended inclusion, that is, "including but not limited to". Unless otherwise specified, the term "or" means "and/or". The term "based on" means "at least partially based on." The terms "an exemplary embodiment" and "an embodiment" mean "at least one exemplary embodiment." The term "another embodiment" means "at least one other embodiment." The terms "first," "second," and the like may refer to different or the same objects. The following may also include other explicit and implicit definitions.

As described above in the BACKGROUND, in the traditional technology for source file compilation, each source file is compiled separately, or only part of source files may be combined very roughly and then compiled, so that the compilation for the project needs to be performed for a large number of times. This cannot be adapted to a large project containing a large number of source files, and anomalies may occur when the source files increase or decrease, so it is difficult to meet needs of users.

For example, in traditional technology, a tool that may support a combination of source files includes CMAKE only. The use of CMAKE may be achieved by setting UNITY_BUILD attribute to ON in a target. However, the use of CMAKE cannot produce a good effect on a large project. Mainly limited by the problem of multiple symbol duplication definitions of source files, CMAKE cannot deal with conflicts that may arise when combining source files, and anomalies may occur when source files are added or deleted, so CMAKE is not widely used.

In order to at least partially solve one or more of the above problems and other potential problems, the embodiments of the present disclosure propose a method for compilation. Using the technical solution according to the embodiments of the present disclosure, source files in a project containing a plurality of source files may be combined according to a predetermined combination rule, and then compiled. In this way, it is possible to effectively improve an efficiency of compilation and reduce a time consumption for compilation by reducing the number of times of compilation, so as to improve user experience.

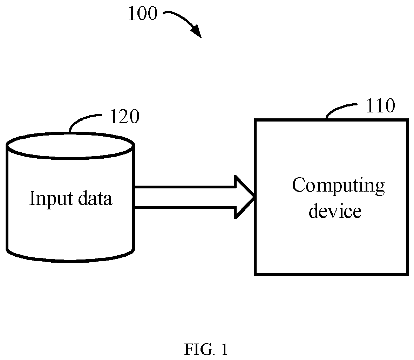

FIG. 1 shows a schematic block diagram of an environment 100 for compilation in which a method for compilation in some embodiments of the present disclosure may be implemented. According to one or more embodiments of the present disclosure, the environment 100 for compilation may be a cloud environment. As shown in FIG. 1A, the environment 100 for compilation includes a computing device 110. In the environment 100 for compilation, input data 120 containing, for example, a source file set containing source files to be compiled, dependent files required to compile the source files in the source file set, and a predetermined combination rule associated with the source file set, may be provided as an input of the computing device 110 to the computing device 110. The computing device 110 may combine the source files contained in the source file set into one or more source file subsets based on the predetermined combination rule. Then, the combined source files may be compiled using the dependent files by using compilers (not shown) included in the computing device 110. During the compilation, the computing device 110 may compile each source file subset as a whole. In other words, no matter how many source files are contained in a source file subset, the computing device 110 only needs to start the compiler once for the source file subset.

It should be understood that the environment 100 for compilation is only exemplary rather than restrictive, and it is extensible. The environment 100 for compilation may include more computing devices 110, and more input data 120 may be provided to the computing devices 110, so that more users may simultaneously use more computing devices 110 and even use more input data 120 to compile the source files in the source file set simultaneously or non-simultaneously.

In the environment 100 for compilation shown in FIG. 1, the input data 120 may be input to the computing device 110 through a network.

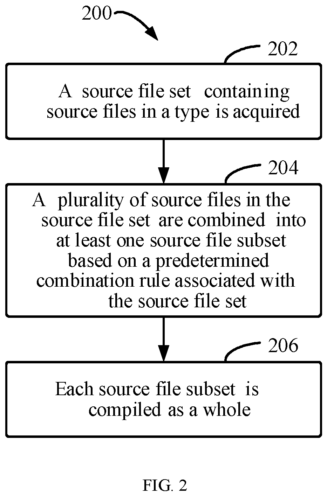

FIG. 2 shows a flowchart of a method 200 for compilation according to some embodiments of the present disclosure. Specifically, the method 200 for compilation may be performed by the computing device 110 in the environment 100 for compilation shown in FIG. 1. It should be understood that the method 200 for compilation may also include additional operations not shown and/or operations shown may be omitted, and the scope of the present disclosure is not limited in this respect.

In block 202, the computing device 110 acquires a source file set. According to one or more embodiments of the present disclosure, the computing device 110 may acquire the source file set by receiving the input data 120, and the source file set contains source files in a type.

For example, the source files may include source files for C++ language and source files for CUDA. In a project, the source files may include both source files for C++ language and source files for CUDA. However, different types of source files cannot be combined and compiled using only one type of compiler because different types of source files need to be compiled by different compilers. Therefore, the source file set needs to contain source files in one type. When the source file set contains different types of source files, the source file set may be divided into a plurality of subsets according to the type of source files, and each subset may contain source files in one type.

In block 204, the computing device 110 combines a plurality of source files in the source file set into at least one source file subset based on a predetermined combination rule associated with the source file set. According to one or more embodiments of the present disclosure, the predetermined combination rule may be considered as a configuration for compilation. Prior to compilation, the computing device 110 may generate compilation units that may contain the plurality of source files, using the source files in the source file set according to the configuration for compilation, and each compilation unit may be compiled by the compiler in the unit of compilation unit.

According to one or more embodiments of the present disclosure, the computing device 110 may further perform an operation of building a compilation system configuration. For example, a C++ project may be compiled by using different build systems such as MAKE, MSVC and NINJA on different platforms such as Linux, Windows and MacOS. In order to perform a normal compilation on a cross-platform quickly, a cross-platform compilation tool, such as CMAKE, is generally selected, so that compilation processes of all platforms may be described using simple statements. However, configurations used by build systems may be directly used as configurations for compilation, while CMakeLists.txt used by CMAKE cannot be directly used for compilation. In this case, the computing device 110 may perform the operation of building the compilation system configuration by using a design from the CMakeLists.txt configuration of CMAKE to configurations of the build systems corresponding to various platforms.

According to some embodiments of the present disclosure, the computing device 110 may combine the source files in the source file set into source file subsets by using an include mechanism common in a syntax level.

According to some embodiments of the present disclosure, all the source files in the source file set may be combined into different source file subsets. In this case, after the source files in the source file set are combined based on the predetermined combination rule, the source files may not exist alone, and all the source files are combined into the source file subsets.

According to other embodiments of the present disclosure, for example, 80% ∼ 95% of the source files in the source file set may be combined into the source file subsets. In this case, after the source files in the source file set are combined based on the predetermined combination rule, there may be some source files that are not combined into the source file subsets.

According to one or more embodiments of the present disclosure, the predetermined combination rule may be generated based on one or more of attributes of the source files in the source file set. The attributes may include, for example, a time for compiling a source file, a size of the source file, a size of the source file compiled, and a conflict status of the source file during combination and compilation.

For example, if it takes a short time (e.g., only 3 to 5 seconds) to compile a source file, a large number of (e.g., 30 to 50) such source files may be combined into a source file subset. In contrast, if it takes a long time (e.g., 1 to 2 minutes) to compile a source file, the source file may not be combined with other files into a source file subset.

For another example, if some source files have a large size or the target files obtained by compiling the source files have a large size, these source files may not be combined with other files into the source file subset, or only a small number of source files in these source files are combined into the source file subset.

In addition, if a normal compilation of the source file subset fails due to conflicts after any two or more source files are combined into the source file subset, the combination of these source files into one source file set should be avoided. According to one or more embodiments of the present disclosure, an actual or simulated compilation of the source file subset may be performed after the source files are combined into the source file subset based on the predetermined combination rule. If the normal compilation fails due to conflicts, the predetermined combination rule may be modified to avoid conflicts.

According to one or more embodiments of the present disclosure, the combining a plurality of source files in the source file set into at least one source file subset may include combining the plurality of source files into the at least one source file subset based on at least one rule-specified source file subset indicated by the predetermined combination rule. Each source file subset of the at least one source file subset is a subset of a rule-specified source file subset of the at least one rule-specified source file subset. For example, the predetermined combination rule may indicate combining a total of seven source files A-G in twenty-six source files A-Z into a source file subset. In this case, if the source file C is deleted due to an adjustment of the source file set, the source files A, B and D to G may still be combined into the source file subset, because removing part of the plurality of source files allowed to be combined and then combining the remaining source files generally does not cause conflicts.

A large project may exhibit a high frequency of iterative additions and deletions of source files. Different source files are handled by different developers, while there is generally only one combination rule for source files. It is easy to cause that the source files in the predetermined combination rules have been renamed or deleted, so that the predetermined combination rule is ineffective. Therefore, according to one or more embodiments of the present disclosure, the source file set may be stored in two dictionary sets, including a rule-specified source file set that is generated by a specified file combination rule, and a rule-hit source file set that hits the source file of the rule according to the actual situation and that is a subset of the rule-specified source file set. With the two source file sets, the addition and deletion of source files may be effectively handled when the source files are combined, so as to avoid a frequent change of rules.

According to one or more embodiments of the present disclosure, the predetermined combination rule may include, for example, dozens of rules. Accordingly, the source files in the source file set may be combined into dozens of source file subsets based on the predetermined combination rule. In addition, each source file subset may contain, for example, several or dozens of source files. It should be understood that the number of rules included in the predetermined combination rule and the number of source files in the source file subset determined according to the predetermined combination rule are only for example and do not limit the scope of protection of the present disclosure.

In block 206, the computing device 110 compiles each source file subset as a whole. According to one or more embodiments of the present disclosure, as described above, after the computing device 110 combines the plurality of source files in the source file set into at least one source file subset, each source file subset of the at least one source file subset may be compiled as a compilation unit. In other words, the compiler only needs to be started once for each source file subset. Compared with starting the compiler once for each source file in the source file set, the technical solution according to the embodiments of the present disclosure may be implemented to significantly reduce the number of times the compiler is started, and therefore reduce the number of times of compilation.

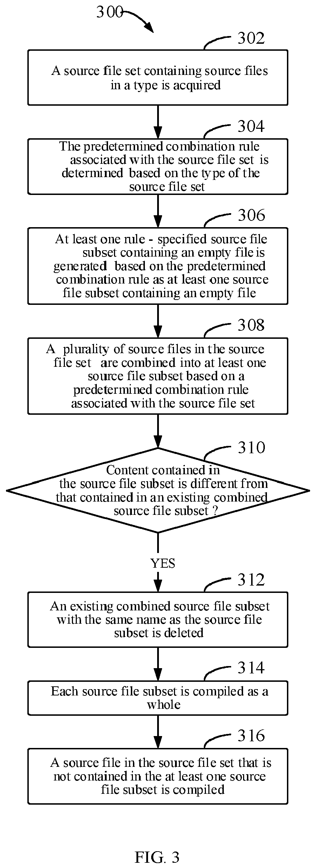

FIG. 3 shows a flowchart of a method 300 for compilation according to some embodiments of the present disclosure. Specifically, the method 300 for compilation may also be performed by the computing device 110 in the environment 100 for compilation shown in FIG. 1. It should be understood that the method 300 for compilation may further include additional operations not shown and/or operations shown may be omitted, and the scope of the present disclosure is not limited in this respect.

In block 302, the computing device 110 acquires the source file set. As described above, according to one or more embodiments of the present disclosure, the computing device 110 may acquire the source file set by receiving the input data 120, and the source file set may contain source files in a type. The specific content of the step involved in block 302 is the same as that of the step involved in block 202, which will not be repeated here.

In block 304, the computing device 110 determines the predetermined combination rule associated with the source file set based on the type of the source file set. According to one or more embodiments of the present disclosure, a project may contain, for example, both source files for C++ language and source files for CUDA. Because different types of source files are compiled using different compilers, it is necessary to determine different combination rules. In this case, the computing device 110 may determine whether to use a predetermined combination rule for the source files for C++ language or use a predetermined combination rule for the source files for CUDA, based on the type of the source files contained in the source file set. It should be understood that the step involved in block 304 is an optional step. When only one type of source files is contained in the project, there is no need to determine the predetermined combination rule associated with the source file set based on the type of the source file set. In this case, block 304 may not be included in the method 300.

In block 306, the computing device 110 generates, based on the predetermined combination rule, at least one rule-specified source file subset containing an empty file, as at least one source file subset containing an empty file. According to one or more embodiments of the present disclosure, prior to actually combining a plurality of source files in the source file set into at least one source file subset based on the predetermined combination rule associated with the source file set, the computing device 110 may generate in advance, based on the predetermined combination rule, at least one rule-specified source file subset containing an empty file. Since this source file subset is generated not for actual source files, but only based on the content specified by the predetermined combination rule, it is called a rule-specified source file subset in the present disclosure.

According to one or more embodiments of the present disclosure, a purpose of generating the rule-specified source file set in advance is to simplify processing when the source files in the source file subset and the combined at least one source file subset change. Since the rule-specified source file subset is generated in advance, after combining the source files in the source file subset into the source file subset, the two subsets may be directly compared to determine whether they contain the same contents. Similarly, in subsequent processes, each combined source file subset may be compared with a previous source file subset, so as to determine whether the content in the subset has changed. It should be understood that the step involved in block 306 is an optional step, which is mainly used to simplify processing. Therefore, block 306 may not be included in the method 300.

In block 308, the computing device 110 combines a plurality of source files in the source file set into at least one source file subset based on a predetermined combination rule associated with the source file set. The specific content of the step involved in block 308 is the same as that of the step involved in block 204, which will not be repeated here.

In block 310, the computing device 110 determines whether the content contained in the source file subset is different from that contained in an existing combined source file subset or not. In response to the computing device 110 determining that the content contained in the source file subset is different from that contained in the existing combined source file subset, the method 300 proceeds to block 312. In response to the computing device 110 determining that the content contained in the source file subset is the same as that contained in the existing combined source file subset, no operation is performed.

According to one or more embodiments of the present disclosure, when the computing device 110 combines the source files into the source file subset, a name of the combined source file subset may be determined according to a predetermined rule. The computing device 110 may determine the name of the source file subset according to a path of the source files. For example, if the path of the plurality of source files combined into the source file subset is A-B-C, the name of the source file set may be determined in the form of the path followed by a suffix such as a number, for example, A-B-C-1 or A-B-C-2. Since the source files to be combined are indicated by the predetermined combination rule, it may be considered that the name of the source file subset is generated based on the predetermined combination rule.

According to one or more embodiments of the present disclosure, the computing device 110 may determine that the content contained in the source file subset is different from that contained in the existing combined source file subset in response to determining that the name of the source file subset is different from that of the existing combined source file subset, because the content of the source file subset is necessarily different that of each existing source file subset when the name of the source file subset is different from that of each existing combined source file subset. If the computing device 110 determines that the name of the source file subset is the same as that of an existing combined source file subset, the computing device 110 may further determine whether the two subsets contain the same content or not. For example, when a project involves multiple compilations due to incremental build, even if the source file subset generated has the same name, a time stamp thereof may change. Therefore, it may be determined whether the source file subsets with different timestamps and the same name contain the same content or not. If the same content is contained, no operation is performed. If different contents are contained, the source file subset with a newer timestamp needs to be compiled.

Specifically, in most build systems, a strategy for an incremental compilation is generally provided for the convenience of development, that is, only the source files with changes are compiled on the basis of a previous compilation. A general method of determining whether to trigger the incremental compilation or not includes determining the timestamp of the file. In response to determining that the timestamp is later than that in the previous compilation, the incremental compilation may be triggered. If the files are purely combined according to the predetermined rule, the timestamp may change each time, which results in unnecessary time consumption for the incremental compilation. Therefore, according to one or more embodiments of the present disclosure, during an initialization of the specified rule, an existence of the combined source file subset may be explored firstly. If the source file subset does not exist, an empty file may be created as the source file subset, otherwise no operation is performed. After all the source file subsets are generated, the content contained in the combined source file subset may be compared with that contained in the actual source file subset. If the contents are inconsistent, an overwrite may be performed, or otherwise, no operation is performed, so as to avoid the problem of a redundant incremental compilation.

In block 312, the computing device 110 deletes an existing combined source file subset with the same name as the source file subset. According to one or more embodiments of the present disclosure, in response to the computing device 110 determining that the content contained in the source file subset is different from that contained in an existing combined source file subset, a subsequent compilation shall be performed for the newly combined source file subset. In this case, in order to avoid causing conflicts, when the source file subset has the same name as an existing combined source file subset, the computing device 110 may delete the existing combined source file subset with the same name as the source file subset. It should be understood that the step involved in block 312 is an optional step. When the source file subset does not have the same name as any existing combined source file subset, there is no need to delete any existing combined source file subset. In this case, block 312 may not be included in the method 300.

In block 314, the computing device 110 compiles each source file subset as a whole. According to one or more embodiments of the present disclosure, block 314 refers to compiling each remaining source file subset as a whole after combining the source files in the source file set into source file subsets and optionally deleting each existing combined source file subset with the same name as the combined source file subset. The specific content of the step involved in block 314 is the same as that of the step involved in block 206, which will not be repeated here.

In block 316, the computing device 110 compiles a source file in the source file set that is not contained in the at least one source file subset. According to one or more embodiments of the present disclosure, after the source files in the source file set are combined based on the predetermined combination rule, there may be some source files that are not combined into the source file subset. These source files are also need to be compiled.

According to one or more embodiments of the present disclosure, the plurality of combined source file subsets and the source files not contained in the at least one source file subset may be compiled in any order or simultaneously.

Contents related to the environment 100 for compilation in which the method for compilation in some embodiments of the present disclosure may be implemented, the method 200 for compilation according to some embodiments of the present disclosure, and the method 300 for compilation according to some embodiments of the present disclosure are described above with reference to FIG. 1 to FIG. 3. It should be understood that the above description is to better show the contents recorded in the present disclosure and is not intended to limit the present disclosure in any way.

It should be understood that the number of various elements and the size of physical quantities used in the above drawings of the present disclosure are only examples, not restrictions on the scope of protection of the present disclosure. The above number and size may be arbitrarily set as needed without affecting the normal implementation of the embodiments of the present disclosure.

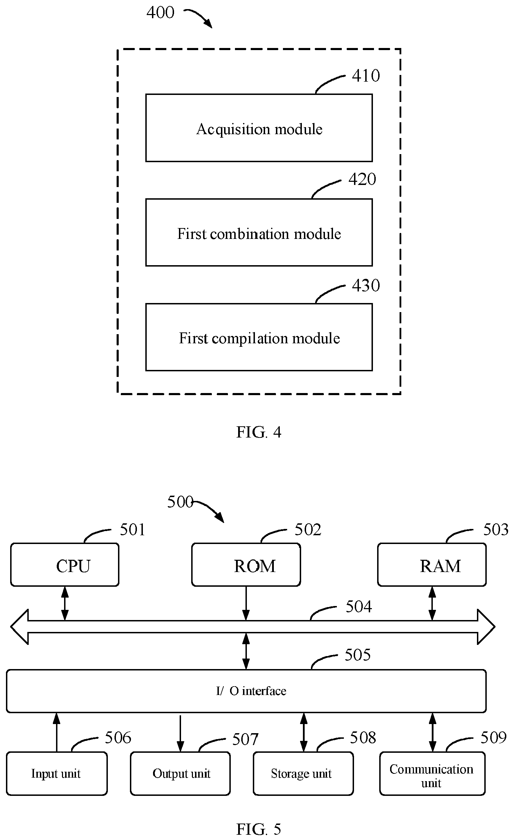

Details of the method 200 for compilation and the method 300 for compilation according to some embodiments of the present disclosure have been described above with reference to FIG. 1 to FIG. 3. Hereinafter, modules in an apparatus for compilation will be described with reference to FIG. 4.

FIG. 4 shows a schematic block diagram of an apparatus 400 for compilation according to some embodiments of the present disclosure. As shown in FIG. 4, the apparatus 400 for compilation may include: an acquisition module 410 configured to acquire a source file set containing source files in a type; a first combination module 420 configured to combine a plurality of source files in the source file set into at least one source file subset, based on a predetermined combination rule associated with the source file set; and a first compilation module 430 configured to compile each source file subset of the at least one source file subset as a whole.

In one or more embodiments, the apparatus 400 for compilation may further include: a first determination module (not shown) configured to determine the predetermined combination rule associated with the source file set based on the type of the source file set.

In one or more embodiments, the predetermined combination rule may be generated based on at least of a time for compiling a source file, a size of the source file, a size of the source file compiled, and a conflict status of the source file during combination and compilation.

In one or more embodiments, the first combination module 420 may include: a second combination module (not shown) configured to combine the plurality of source files into the at least one source file subset based on at least one rule-specified source file subset indicated by the predetermined combination rule. Each source file subset is a subset of a rule-specified source file subset of the at least one rule-specified source file subset.

In one or more embodiments, the apparatus 400 for compilation may further include: a generation module (not shown) configured to generate, based on the predetermined combination rule, at least one rule-specified source file subset containing an empty file, as the at least one source file subset containing an empty file.

In one or more embodiments, the first compilation module 430 may include: a second compilation module (not shown) configured to compile a source file subset as a whole in response to determining that a content contained in the source file subset is different from that contained in an existing combined source file subset.

In one or more embodiments, the second compilation module may include: a second determination module (not shown) configured to determine that a name of the source file subset is different from that of the existing combined source file subset.

In one or more embodiments, the name of the source file subset is generated based on the predetermined combination rule.

In one or more embodiments, the apparatus 400 for compilation may further include: a deletion module (not shown) configured to delete the existing combined source file subset with the same name as the source file subset.

In one or more embodiments, the apparatus 400 for compilation may further include: a third compilation module (not shown) configured to compile a source file in the source file set that is not contained in the at least one source file subset.

With the above description with reference to FIG. 1 to FIG. 4, the technical solution according to the embodiments of the present disclosure has many advantages over traditional solutions. For example, using the technical solution according to the embodiments of the present disclosure, the source files in a project containing a plurality of source files may be combined according to the predetermined combination rule, and then compiled. In this way, it is possible to effectively improve the efficiency of compilation and reduce the time consumption for compilation by reducing the number of times of compilation, so as to improve user experience. After testing, when the technical solution according to the embodiments of the present disclosure is applied to a deep learning framework, the time for compiling the source files may be reduced by more than 30%, so that the efficiency of compilation may be significantly improved. In addition, the technical solution according to the embodiments of the present disclosure is applicable to a variety of platforms such as Linux, Windows and MacOS, and is applicable to a variety of build systems such as MAKE, Ninja and MSVC, and therefore exhibits a high usability.

According to the embodiments of the present disclosure, the present disclosure further provides an electronic device, a computer-readable storage medium, and a computer program product.

FIG. 5 shows a schematic block diagram of an exemplary electronic device 500 for implementing the embodiments of the present disclosure. For example, the computing device 110 shown in FIG. 1 and the apparatus 400 for compilation shown in FIG. 4 may be implemented by the electronic device 500. The electronic device 500 is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 5, the electronic device 500 includes a computing unit 501, which may perform various appropriate actions and processing based on a computer program stored in a read-only memory (ROM) 502 or a computer program loaded from a storage unit 508 into a random access memory (RAM) 503. Various programs and data required for the operation of the electronic device 500 may be stored in the RAM 503. The computing unit 501, the ROM 502 and the RAM 503 are connected to each other through a bus 504. An input/output (I/O) interface 505 is also connected to the bus 504.

Various components in the electronic device 500, including an input unit 506 such as a keyboard, a mouse, etc., an output unit 507 such as various types of displays, speakers, etc., a storage unit 508 such as a magnetic disk, an optical disk, etc., and a communication unit 509 such as a network card, a modem, a wireless communication transceiver, etc., are connected to the I/O interface 505. The communication unit 509 allows the electronic device 500 to exchange information/data with other devices through a computer network such as the Internet and/or various telecommunication networks.

The computing unit 501 may be various general-purpose and/or special-purpose processing components with processing and computing capabilities. Some examples of the computing unit 501 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 501 may perform the various methods and processes described above, such as the methods 200 and 300. For example, in some embodiments, the methods 200 and 300 may be implemented as a computer software program that is tangibly contained on a machine-readable medium, such as a storage unit 508. In some embodiments, part or all of a computer program may be loaded and/or installed on electronic device 500 via the ROM 502 and/or the communication unit 509. When the computer program is loaded into the RAM 503 and executed by the computing unit 501, one or more steps of the methods 200 and 300 described above may be performed. Alternatively, in other embodiments, the computing unit 501 may be configured to perform the methods 200 and 300 in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) for compilation, comprising:
acquiring (202) a source file set containing source files in a type;
combining (204) a plurality of source files in the source file set into at least one source file subset, based on a predetermined combination rule associated with the source file set; and
compiling (206) each source file subset of the at least one source file subset as a whole.

2. The method of claim 1, further comprising:
determining the predetermined combination rule associated with the source file set based on the type of the source file set.

3. The method of claim 1, wherein the predetermined combination rule is generated based on at least one of a time for compiling the source file, a size of the source file, a size of the source file compiled, and a conflict status of the source file during combination and compilation.

4. The method of claim 1, wherein the combining a plurality of source files in the source file set into at least one source file subset comprises:
combining the plurality of source files into the at least one source file subset based on at least one rule-specified source file subset indicated by the predetermined combination rule, wherein each source file subset of the at least one source file subset is a subset of a rule-specified source file subset of the at least one rule-specified source file subset.

5. The method of claim 1, further comprising:
generating, based on the predetermined combination rule, at least one rule-specified source file subset containing an empty file, as the at least one source file subset containing an empty file.

6. The method of claim 1, wherein the compiling each source file subset of the at least one source file subset as a whole comprises:
compiling a source file subset as a whole in response to determining that a content contained in the source file subset is different from that contained in an existing combined source file subset.

7. The method of claim 6, wherein the determining that a content contained in the source file subset is different from that contained in an existing combined source file subset comprises:
determining that a name of the source file subset is different from a name of the existing combined source file subset.

8. The method of claim 7, wherein the name of the source file subset is generated based on the predetermined combination rule.

9. The method of claim 6, further comprising:
deleting an existing combined source file subset with the same name as the source file subset.

10. The method of claim 1, further comprising:
compiling a source file in the source file set, wherein the source file is not contained in the at least one source file subset.

11. An apparatus (400) for compilation, comprising:
an acquisition module (410) configured to acquire a source file set containing source files in a type;
a first combination module (420) configured to combine a plurality of source files in the source file set into at least one source file subset, based on a predetermined combination rule associated with the source file set; and
a first compilation module (430) configured to compile each source file subset of the at least one source file subset as a whole.

12. An electronic device (500), comprising:
at least one processor (501); and
a memory (502, 503) communicatively connected to the at least one processor, wherein the memory stores instructions executable by the at least one processor, and the instructions, when executed by the at least one processor, cause the at least one processor to implement the method of any one of claims 1 to 10.

13. A non-transitory computer-readable storage medium having computer instructions stored thereon, wherein the computer instructions allow a computer to implement the method of any one of claims 1 to 10.

14. A computer program product containing a computer program, wherein the computer program, when executed by a processor, causes the processor to implement the method of any one of claims 1 to 10.
